(19) Europäisches Patentamt
European Patent Office
Office européen des brevets

(11) Publication number: **0 247 261 A1**

# (12) EUROPEAN PATENT APPLICATION

(21) Application number: **86304141.4**

(22) Date of filing: **30.05.86**

(51) Int. Cl.[4]: **G01N 21/64**, G01N 21/77, G01N 21/80

(43) Date of publication of application: **02.12.87 Bulletin 87/49**

(84) Designated Contracting States: **AT BE CH DE FR GB IT LI LU NL SE**

(71) Applicant: **THE REGENTS OF THE UNIVERSITY OF CALIFORNIA**
**2490 Channing Way**
**Berkeley California 94720(US)**

(72) Inventor: **Hirschfeld, Tomas**
**1262 Vancouver Way**
**Livermore California 94550(US)**
Inventor: **Wong, Francis**
**767 Contada Circle**
**Danville California 94526(US)**

(74) Representative: **Bizley, Richard Edward et al**
**BOULT, WADE & TENNANT 27 Furnival Street**
**London EC4A 1PQ(GB)**

## (54) pH-sensitive optrode.

(57) An apparatus for monitoring the pH of a fluid which comprises

(a) means for generating an illumination beam,

(b) support material for fluorescent organic dye molecules, the surface being in contact with the said fluid,

(c) a plurality of organic dye molecules covalently attached to the surface of a support material, wherein the surface density of the organic dye molecules bound to the support material is adjusted so that it falls within a range characterised by a strong fluorescent response in the range of the pH being monitored.

(d) means for detecting the fluorescent signal and relating the intensity thereof to the pH of the associated fluid.

The apparatus is of particular use in the invasive monitoring of blood pH.

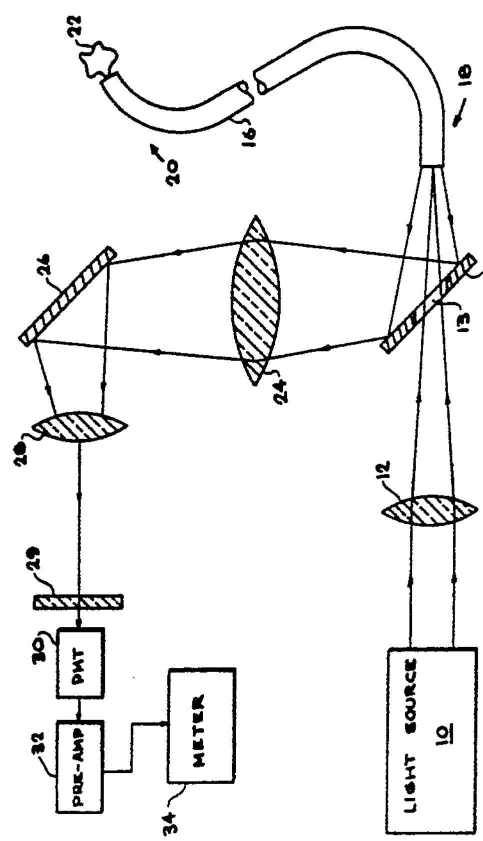


FIG.1

EP 0 247 261 A1

# pH-SENSITIVE OPTRODE

The invention relates to optical means for remotely monitoring pH and, particularly, for invasive, or direct, monitoring of blood pH.

In medicine, invasive, or direct, monitoring of blood acid-base parameters and other selected ions is desirable, and in many cases necessary, in the management of critically ill patients or those undergoing complex surgical procedures. In particular, blood pH is regulated within very narrow bounds in normal individuals, varying no more than several hundredths of a pH unit from an average of 7.40. The pH is directly dependent on bicarbonate and dissolved $CO_2$ concentrations in the blood. As a consequence, several anesthetic agents and diseases affect blood pH, either directly or indirectly. In particular, diabetic acidosis, which arises from depletion of serum bicarbonate, and pulmonary disorders and anesthetic agents, which affect respiration, can cause rapidly increased blood $pCO_2$, which in turn can produce striking alterations in blood pH. Either of these events are life threatening. Thus, there is an important medical need for directly monitoring blood pH.

Currently, the most widespread methods for direct blood pH measurement, or direct blood electrolyte monitoring, involve the use of ion-selective electrodes. While such electrodes can provide rapid and accurate measurements, there are several disadvantages to their use. The familiar glass pH electrode does not readily lend itself to the construction of invasive devices. Although miniature glass electrodes have been mounted on flexible catheters, small glass electrodes are inherently fragile and therefore present serious risks to the patient. Indeed, most investigators of in vivo blood pH have not employed invasive electrodes, but rather have adopted the somewhat more cumbersome technique in which an arterial-venous shunt is constructed to allow blood flow past a rigidly mounted, mechanically protected glass electrode.

Electrical interference is a major problem with high-resistance microelectrodes such as glass electrodes. Low-resistance miniature electrodes are available, and can give satisfactory measurements in the presence of other electrical equipment, but these require that the amplifying and processing electronics be physically close to the electrodes. Thus, the capability for remote measurements is lost. The most common electrical interference occurs in the 50-60 Hz and radio frequency ranges. While such interference can be reduced by special filtering electronics, both forms of interference can cause DC shifts which are easily overlooked.

Finally, the use of currently available electrodes can present direct hazards to patient safety. Electronically based transducers can pose an electrical hazard, especially when other such transducers are used at the same time, and polyvinyl chloride-based electrodes widely used with inophores, such as valinomycin, can be dissolved by may gaseous anethetics.

The electrical interference problem of electrodes is not limited to their uses in medicine. In any environment where high sensitivity is critical, electrical noise generated by extraneous fields will be a problem. Other problems inherent to the use of electrodes include the susceptibility of wire leads and couplings to deterioration under corrosive conditions, or conditions of alternating temperatures.

Many of the above-mentioned difficulties with current information-gathering technology can be overcome by using remote, in situ optical probes coupled to a detector by optical waveguides, or fiber optics, e.g., Hirschfeld, "Remote Fiber Fluorimetric Analysis," Energy and Technology Review, pgs. 17-21 (July 1980); Borman, "Optrodes," Anal. Chem., Vol. 53. pgs. 1616A-1618A (December 1981); and Peterson and Vurek, "Fiber Optic Sensors for Biomedical Applications," Science, Vol. 224, pgs. 123-129 (13 April 1984). Fiber optics are durable, corrosion-resistant, heat-resistant, impervious to electrical or magnetic interference, and are available in very small diameters, which makes them amenable for use with miniature probes.

Peterson, et al., in U.S. Patent 4,200,110, issued 29 April 1980, disclose a pH sensing device which employs an optical transducer connected to a detector by two fiber optics. The optical transducer is a membranous-walled chamber which contains particles on which colorimeteric pH sensitive dyes are attached or impregnated. The dye is illuminated by white light transmitted by one fiber optic, and the light scattered by the dye-covered particles is collected by the other fiber optic. Use of more than one fiber optic reduces sensitivity because precise alignment of the illuminating and light-collecting fibers must be maintained, and because illumination of dye molecules is less efficient when separate fibers are used for illumination and collection than if a single fiber is used for both collection and illumination. Moreover, the presence of the membrane between the pH-sensitive dye and the fluid being monitored substantially reduces the response time of the device to rapid changes in pH.

Numerous workers have used fluorescein or other dyes bound to solid supports as quantitative pH inidcators. Haaijman and Van Dalen, "Quantification in Immunofluorescence Microscopy: A New Standard for Fluorescein and Rhodamine Emission Measurement," Journal of Immunological Methods, Vol. 5, pgs, 359-374 (1974), quantified the fluorescent response of fluorescein bound to Sephadex supports to changes in pH. Hirschfeld, in Borman, "Optrodes," cited above, reported binding fluorescein to porous glass supports for the purpose of measuring pH, further results being reported in Hirschfeld et al., "Feasibility of Using Fiber Optics for Monitoring Groundwater Contaminants," Optical Engineering, Vol. 22, pgs. 527-531 (October 1983). Saari and Seitz, in Analytical Chemistry, Vol. 54, pgs. 821-823 (April 1982), disclose a pH sensor based on fluorescence generated by a fluoresceinamine immobilized on a controlled pore glass support. Immobilization was achieved by reacting controlled pore glass derivatized with isothiocyanate groups with a saturated solution of fluoresceinamine. Saari and Seitz report that their procedure for immobilizing fluoresceinamine reduces the intensity of the fluorescent signal by approximately three orders of magnitude from that of a comparable amount of unbound fluoresceinamine. They also report an extremely unfavorable signal-to-noise ratio of approximately 1:2 at pH 3.

The foregoing illustrates the limitations of the current pH-sensing technology, especially in the area of medical applications. An alternative to available pH sensing methods which overcame some of these limitations would be highly advantageous for remote pH-sensing applications, particularly in situ monitoring of blood pH.

The present invention aims to provide a pH-sensing apparatus which generate an optical signal related to the magnitude of the pH sensed, and which can transmit said optical signal to a detector by a fiber optic.

The present invention further aims to provide a low cost, low maintenance pH sensor capable of remotely monitoring pH and compatible with a multi-position monitoring system utilizing optical sensors.

The present invention also aims to provide an optically based pH sensor capable of monitoring the pH of physiological fluids, particularly blood.

In accordance with the present invention a support material is provided on which organic dye molecules are covalently attached at a surface density falling within a predetermined range. The invention is an application of the discovery that the pH dependent fluorescent response of bound organic dye molecules depends critically on (1) the surface density of organic dye molecules bound to the support material and (2) the nature of the covalent linkage between the organic dye molecules and the support material. The invention is operated by contacting the support material on which the organic dye is attached with the fluid whose pH is to be determined. When in contact, the organic dye on the support material is illuminated so that it is caused to fluoresce. The intensity of organic dye fluorescence is then related to pH.

Preferably the invention comprises a fiber optic for transmitting an illumination beam to the organic dye molecules and for collecting the fluorescence thereof, and preferably the support material is in the form of a particle, hereinafter referred to as a carrier particle. An illumination beam may be transmitted from a first end of the fiber optic to a second end of the fiber optic, the illumination beam comprising light from at least one associated light source. A carrier particle with covalently bonded organic dye molecules is attached to the second end of the fiber optic so that light from the illumination beam emanating from the second end causes the covalently bound organic dye molecules to fluoresce. The organic dye molecules are attached to the carrier particle at a surface density within the predetermined range. A portion of the fluorescence from the bound organic dye molecules is collected by the second end of the fiber optic and transmitted to the first end of the fiber optic, the transmitted portion of the fluorescence comprising a fluorescent signal. At the first end of the fiber optic the fluorescent signal is separated from the illumination beam and analyzed.

The present invention is addressed to problems associated with remote pH monitoring in hostile or inaccessible regions. It aims to advantageously overcome many of these problems by combining rugged, high quality fiber optics with simple in situ transducers for generating fluorescent signals related to ambient pH. For pH measurements in physiological fluids, the problem of poor signal-to-noise ratio may be overcome by adjusting the surface density of organic dye molecules bound to a carrier particle so that it falls within a predetermined range characterized by a strong fluorescent response in the range of physiological pHs.

In addition, all particular embodiments of the invention are amenable for use with a multi-position sensing system which comprises many sensors, all of which feed signals to a single station for analysis. Such configuration can reduce costs by obviating the need for separate analyzers for each sensor, and can increase reproducibility between sensors by having all signals analyzed by the same instrument.

The present invention will be further described by way of example only with reference to the accompanying drawings, in which;

Figure 1 diagrammatically illustrates an optical configuration suitable for use with the present invention.

Figure 2 diagrammatically illustrates an optical configuration which includes means for monitoring Raman backscatter from the fiber optic.

Figure 3 is a curve describing the relationship between fluorescence intensity and pH for an embodiment of the invention employing fluorescein covalently linked to a controlled-pore glass carrier particle via aminopropyl silane coupling agents.

Figure 4 is a curve describing the relationship between fluorescence intensity and pH for an embodiment of the invention employing fluorescein covalently linked to a controlled-pore glass carrier particle via aminoaryl silane coupling agents.

In accordance with the present invention an apparatus is provided for measuring pH by means of an in situ fluorescent probe which generates a fluorescent signal whose intensity varies with ambient pH. The fluorescent probe comprises a support material onto which a plurality of organic dye molecules are covalently attached so that there is a sufficient number of non-dimerized organic dye molecules on the support material to generate a fluorescent signal. The invention may be operated by first placing the fluorescent probe in contact with the fluid whose pH is to be determined, i.e., an associated fluid. Next, the fluorescent probe is caused to fluoresce by illuminating it with light from a suitable light source. A portion of the resulting fluorescence is then collected, and its intensity is related to pH.

Preferably the support material is in the form of a particle, hereinafter referred to as a carrier particle, attached to an end of a fiber optic. In accordance with this embodiment an illumination beam from a associated light source is transmitted from a first end of the fiber optic to a second end of the fiber optic, the carrier particle being attached to the second end of the fiber optic so that light from the illumination beam emanating from the second end illuminates the carrier particle causing the attached organic dye molecules to fluoresce. A portion of the generated fluorescence is collected by the second end of the same fiber optic and transmitted to the first end of the fiber optic, the transmitted fluorescence forming a fluorescent signal. At the first end of the fiber optic the fluorescent signal is separated from the illumination beam and analyzed.

Many different support material and many different techniques for covalently attaching organic dye molecules, such as fluoroscein, are available fro use in accordance with the present invention. Such materials and techniques are well known in the arts of affinity chromatography and enzyme immobilization technology, e.g., Jakoby and Wilchek, editors "Affinity Techniques," Methods in Enzymology, Vol. 34 (Academic Press, NY, 1974), Mosbach, editor, "Immobilized Enzymes," Methods in Enzymology , Vol. 44 (Academic Press, NY, 1976), and Maugh II, Science , Vol. 223, pgs. 474-476 (3 February 1984). Among support materials, inorganic support materials, such as controlled-pore glass, are preferred. Inorganic support material suitable for use in accordance with the present invention are described by Messing and Weetall, U.S. Patent 3,519,538 issued 7 July 1970, entitled, "Chemically Coupled Enzymes," Weetall, U.S. Patent 3,652,761 issued 28 March 1972, entitled "Immunochemical Composites and Antigen or Antibody Purification Therewith" and Weetall, "Covalent Coupling Methods for Inorganic Support Materials," in Methods of Enzymology, Vol. 44, pgs. 134-148 (Academic Press, NY, 1976).

The preferred means of covalently bonding organic dye molecules to an inorganic support materal is by way of a silane coupling agent. Silane coupling agents are silicon compounds which possess two different kinds of reactivity: organofunctional and siliconfunctional. That is, silane coupling agents have a silicon portion with an affinity for inorganic materials such as glass or aluminum silicate, and they have an organic portion which may be tailored to combine with a variety of other organics, such as fluorescein, or some suitably derivatized version thereof, such as fluorescein isothiocyanate. The most preferred support material is controlled-pore glass. Controlled pore glass is commercially available in a variety of forms manufactured according to the techniques of Hood et al., U.S. Patent 2,106,764, Chapman et al., U.S. Patent 3,485,687, and Haller, U.S. Patent 3,549,524. Moreover, it is commercially available in a variety of pore sizes and with a variety of different silane coupling agents already attached (Pierce Chemical Company, Handbook and General Catalog, Rockford, IL, 1983). Alternatively, silane coupling agents suitable for use with the present invention can be prepared and attached to control pore glass in accordance with the teaching of Weetall and Filbert, "Porous Glass for Affinity Chromatography Applications," in Methods of Enzymology, Vol. 34, pgs. 59-72 (Academic Press, NY, 1974).

Aminopropyl and aminoaryl silane coupling agents having formulas $-O_3Si(CH_2)_3NH_2$ and

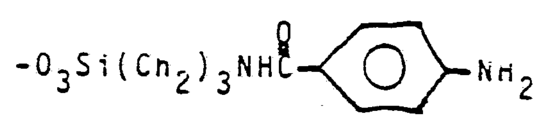

respectively, are preferred.

A crucial feature of the present invention is the requirement that the organic dye molecules be attached to the support material such that a sufficient number of the molecules remained non-dimerized for a fluorescent signal to be generated. It has been discovered that when certain organic dyes are attached to a support material at high surface densities adjacent dye molecules interact, and in so doing reduce the fluorescence response of the interacting molecules. It is believed that this interaction involves the formation of dimers, akin to the dimerization process described by Chambers et al., in "Effect of Dimer Formation on the Electronic Absorption and Emission Spectra of Ionic Dyes, Rhodamines and Other Common Dyes," J. Physical Chemistry , Vol. 78, pgs 380-387 (1974).

Any organic dye whose fluorescence is substantially reduced by dimerization is amenable for use in the invention. In particular, this class of dyes includes sulforhodamine, rhodamine, eosin B, eosin Y, acriflavine, proflavine, acridine orange, and fluorescein. Fluorescein is the preferred organic dye for measuring pH in the physiological range.

In accordance with the invention the fluorescent probe comprising the support material and bound organic dye molecules can be characterized either by the number of non-dimerized covalently attached fluorescein molecules present, or by the average density of bound organic dye molcules (whether dimerized or not). In the latter case the approximate length of the coupling agent must be known and the bound organic dye must be uniformly and substantially randomly distributed on the surface of the support material. The number of non-dimerized organic dye molecules covalently attached to a support material is referred to as the first plurality of organic dye molecules. The number of organic dye molecules covalently attached to a support material uniformly and substantially randomly distributed at a density within a preferred range is referred to as the second plurality of organic dye molecules.

At least two factors determine the preferred range of densities for particular support materials and coupling agents: the surface density of the coupling agent on the support material, and the length and flexibility of the coupling with an attached organic dye molecule. If attached dye molecules are distributed uniformly and substantially randomly on the surface of the support material and if the approximate length of the coupling agent is known, then the probability that there will be an attached organic dye molecule within interaction distance of any given attached dye molecule can be readily computed, e.g., Pielou, An Introduction to Mathematical Ecology (Wiley-Interscience, NY, 1969) pgs. 111-123. From this probability the number of non-interacting attached organic dye molecules can be computed, and an expected fluorometric response estimated. Thus, for a given support material and coupling agent an upper limit on organic dye molecule surface density can be computed. The lower limit of organic dye molecule surface density is determined by detector sensitivity and noise level. The upper and lower limits define an operable, or preferred, range of surface densities. Within the operable range there is a most preferred surface density where there is a maximum of non-interacting organic dye molecules.

The nature of the surface of the support material is important in determining the lower limit of preferred surface densities: the greater amount of available surface area per illuminated region of support material the lower the limit of operable densities. For example, controlled-pore glass possesses a highly convoluted surface, and its surface area per volume is exceedingly high. Thus, the lower limit of the preferred density range for controlled-pore glass is substantially lower than that of other support materials, such as cross-linked polymers, and the like. In all cases, however, the density within the illumination-collection region must be high enough so that there is a sufficient number of organic dye molecules to generate a fluorescent signal. By way of example, current detection apparatus can readily detect a fluorescent signal from as few as $10^3$ fluorescein molecules, Haaijman and Van Dalen, "Quantification in Immunofluorescence Microscopy: A New Standard for Fluorescein and Rhodamine Emission Measurement," Journal of Immunological Methods, Vol. 5, pgs. 359-374 (1974).

To insure that the surface density of organic dye molecules lie within the operable range, either the surface density of coupling agents can be controlled, or the reaction between the coupling agents and the organic dye (or suitable derivatives thereof) can be controlled. The later alternative is particularly applicable when commercially available derivatized controlled-pore glass is used, as the surface density of the coupling agents is quite high.

If the surface density of coupling agents is relatively sparse so that interaction between organic dye molecules is precluded (or minimal), then the coupling agents can be completely reacted with the organic dye, saturating the coupling agents with organic dye molecules. If the surface density of the coupling agents is relatively high, then procedures must be chosen which prevent saturation of the coupling agents with organic dye molecules. Such prevention can be accomplished using standard chemical techniques such as disabling some of the coupling agents (for example by

including a reactant which competes with the organic dye for coupling agent reaction cites, but which does not substantially affect the fluorescence output of the organic dye), or adjusting reaction times, reactant concentrations, and the like.

Non-specific binding or adsorption is a common problem in procedures for covalently bonding molecules to support materials. That is, in many cases the molecule to be covalently bonded also has an affinity for ionic or hydrogen bonding with the support material. A washing step is typically required to remove non-specifically bonded molecules from the support material. PaDraig et al., in "Interfering and Complicated Adsorption Effects in Bioaffinity Chromatography," Methods in Enzymology, Vol. 34 (Academic Press, NY, 1974) pgs. 108-126, and Messing, in "Adsorption and Inorganic Bridge Formations," Methods in Enzymology, Vol. 44 (Academic Press, NY, 1976) pgs. 148-169, discuss the adsorption phenomena and techniques for removing adsorbed molecules. Where the predominant cause of adsorption is ionic bonding, the standard technique for removal is washing in a concentrated salt solution, e.g., NaCl or KCL.

Once organic dye molecules are attached to a suitable support material at an operable surface density techniques for causing the attached organic dye molecules to fluoresce and for collecting and analyzing the resultant fluorescence are well known the art of fluorometry, e.g., Hercules, editor, Chapter 2, in Fluorescence and Phosphorescence Analysis (Interscience Publications, NY, 1966), White and Argauer, Chapter 2, in Fluorescence Analysis - (Marcel Dekker, Inc., NY, 1970), and Parker, Chapter 3, in Photoluminescence of Solutions (Elsevier Publishing Company, NY, 1968).

As mentioned above the preferred embodiment of the invention comprises support material in the form of a carrier particle which is attached to the end of a fiber optic. Figure 1 diagrammatically illustrates an optical configuration suitable for use with a preferred embodiment. An illumination beam generated by light source 10 is focussed by lens 12 and directed to first end 18 of fiber optic 16. Preferably light source 10 is a laser operating at a wavelength suitable for inducing the organic dye to fluoresce, e.g., an argon-ion laser operating at 488 nm for fluorescein. Most preferably, light source 10 is a mode-locked laser generating pulses in the nanosecond range, or less. Pulsed output is preferable over continuous output because very high peak power can be achieved with relatively low average power, thereby maximizing fluorescent output while minimizing the chance of heat damage to system components, e.g., fiber optic 16, carrier particle 22, and the means for attaching the carrier particle to the fiber optic. The focal length of lens 12 is relatively long so that the angle of incidence of the illumination beam as it enters fiber optic 16 is within the acceptance angle of the fiber optic. This ensures that all of the illumination beam will be transmitted by fiber optic 16. Fiber optic 16 preferably is a step index type communications fiber optic, such as a Valtec PC-10 (Valtec Corp., West Boylstrom, MA), although this is not a criticial requirement of the invention, and other types of fiber optics can be used. Preferably the average diameter of carrier particle 22 is at least the magnitude of the diameter of the core of fiber optic 16. Most preferably the average diameter of carrier particle 22 is between about 1.3 times the diameter of the core of fiber optic 16.

The illumination beam exits fiber optic 16 at second end 20 so that the organic dye molecules on carrier particle 22 are caused to fluoresce. A portion of the fluorescence is collected by fiber optic 16 at second end 20 and transmitted to first end 10. Adjacent to first end 18 apertured mirror 14 separates the "outgoing" illumination beam from the "incoming" fluorescent signal. Lens 24 collects the fluorescent signal and focusses it on collimating lens 28 via mirror 26. The fluorescent signal then passes through band-pass filter 29 and is collected by photomultiplier tube 30. Band-pass filter 29 is chosen to restrict the light incident on the photomultiplier tube 30 to that which has wavelengths corresponding to those of the fluorescent emission distribution of the organic dye. For example, if the organic dye is fluorescein and if light source 10 is an argon ion laser operating at 488 nm, band-pass filter 29 can be chosen to pass light at wavelengths greater than 500 nm and less than 550 nm. Under these conditions scattered light from the illumination beam is prevented from reaching photomultiplier tube 30. Output from photomultiplier tube 30 is amplified by preamplifier 32. The output of preamplifier 32 can be read directly on meter 34, or the output can be manipulated further by a data processing means which provides a direct pH readout related to the intensity of the fluorescent signal.

The accuracy of the pH determination can be improved by providing means for monitoring the Raman emission from the fiber optic caused by the illumination beam. In particular, the intensity of Raman emissions backscattered and transmitted to first end 18 can be monitored. The intensity of the backscattered Raman emissions depends directly on the intensity of the illumination beam and the length of the fiber optic. By monitoring the ratio of the intensity of the fluorescent signal to the intensity of the collected Raman backscatter, errors due to fluctuations in illumination beam intensity are automatically factored out. That is, in an embodiment employing Raman backscatter measurements, a fluorescent signal-Raman backscatter intensity ratio is related to pH. Techniques for measuring Raman backscatter are well known in the art of Raman spectroscopy, e.g., Chapter 2 entitled "Experimental Methods," in Tobin, Laser Raman Spectroscopy (Wiley-Interscience, NY, 1971) describes suitable apparatus. Figure 2 illustrates an optical configuration which includes means for monitoring Raman backscatter. Between collimating lens 28 and band-pass filter 29 beam splitter 50 diverts a portion of the light collected by collection lens 24. The diverted portion is then directed to double monochromator 52 (e.g:, model 1430, Spex Corporation, Metuchen, NJ), or like instrument, for measuring the intensity of the Raman backscatter. Output from double monochromator 52 is preamplified by preamplifier 54 and received by analog voltage divider 56. Likewise the output of preamplifier 32 is received by analog voltage divider 56. The output of analog voltage divider 56 is directly related to the fluorescence intensity--Raman backscatter intensity ratio, and can be read off of meter 34 or can be converted to a pH readout by data processing means 58.

The following examples illustrate methods of constructing the preferred embodiment for different choices of support material.

Example I

A controlled pore glass carrier particle was employed. Carrier particle diameter was within the range of 122 to 177 µm, average pore diameter was 500 angstroms, expected surface area was 70 $m^2$/gram, and the carrier particle was derivatized with aminopropyl coupling agents at a approximate surface density of 13.8 - 15.5 x $10^{13}$ coupling agents per square centimeter. The chemical structure of the aminopropyl coupling agent is described in Weetall and Filbert, "Porous Glass for Affinity Chromatography Applications," Methods in Enzymology, Vol. 34, pgs. 59-72. Carrier particles of this type are available from Pierce Chemical Company (Rockford, IL), product number 23909. The derivatized carrier particle was attached to the end of a 250 µm. core diameter Valtec 441 fiber optic, which end was cleaved with a diamond cutter to obtain a flat and clear surface. The carrier particle was glued to the end of the fiber optic by a UV-cured optical adhesive (NoA 61, Norland Products, Inc., New Brunswick, NJ). After the carrier particle was attached, it was dipped into a 1.3 x $10^{-5}$ M aqueous solution of fluorescein isothiocyanate (e.g., available from Aldrich Chemical Company, Milwaukee, WI) for about 20-30 minutes, followed by soaking in water for about 30-60 minutes. The pH response of the resulting sensor was tested by measuring pHs of several solutions buffered at predetermined pHs. The attached fluorescein was illuminated by an argon ion laser tuned to 488 nm at 2 microwatts. Figure 3 illustrates relative fluorescence intensity versus pH for this embodiment.

Example II

A controlled-pore glass carrier was employed, the carrier particle having a diameter within the range of about 122-177 µm, an average pore diameter of about 500 angstroms, average surface area per gram of about 70 square meters, and being derivatized with an aminoaryl coupling agent at an approximate surface density of about 21.5-34.4 x $10^{12}$ coupling agents per square centimeter. The chemical structure of the aminoaryl coupling agent is described in Weetall and Filbert, "Porous Glass for Affinity Chromatography Applications," Methods in Enzymology, Vol. 34, pgs. 59-72. This type of carrier particle is commercially available from Pierce Chemical Company (Rockford, IL), product number 23415. The aminoaryl-derivatized carrier particle was attached to the end of the Valtec 441 250 µm core diameter fiber optic as in Example I. After attachment the carrier particle was dipped into a 1.3 x $10^{-5}$ M aqueous solution of fluorescein isothiocynate as in Example I, followed by soaking in water as in Example I. The pH response was measured in an identical manner as that of the embodiment described in Example I. Figure 4 illustrates relative fluorescence intensity versus pH for this embodiment.

Example III

Sephadex G-25 carrier particles (Pharmacia Fine Chemicals, Uppsula, Sweden) are aminated with aminoethylsulphuric acid. Carrier particles are suspended in 2 M NaOH. After swelling (minimally 3 hours), the suspension is centrifuged for 1 minute at 3000 g in a graded centrifuge tube. The supernatant is removed by suction and a solution containing 0.1 g aminoethylsulfuric acid (Fluka AG, Buchs, Switzerland) per ml 2 M NaOH is added at four times the volume of the packed carrier particles. The mixture is incubated at 85°C for between 15 minutes and 24 hours. After incubation, the carrier particles are washed on a sintered glass funnel first with 200 ml 2M NaOH; then with a large volume of distilled water, and finally with 0.05 M carbonate buffer, pH 9.5. The carrier particles are dried after washing with acetone. One milligram fluorescein isothiocyanate is dissolved in 100 ml of carbonate buffer; pH 9.5. 10 ml of freshly prepared fluorescein isothiocyanate solution is added to 1 ml sedimented carrier particles. The carrier particles

are incubated in the solution at room temperature for between 1-60 minutes. Afterwards the carrier particles are washed three times with 15 ml 0.05 M carbonate buffer, pH 9.5, three times with 15 ml PBS, pH 7.2. Dried carrier particles are attached to the end of a 250 µm core diameter Valtec 441 fiber optic as described in Example I.

The foregoing descriptions of a preferred embodiment of the invention has been presented for purposes of illustration and description. It is not intended to be exhaustive or to limit the invention to the precise form disclosed, and obviously many modifications and variations are possible in light of the above teaching. The embodiments were chosen and described in order to best explain the principles of the invention and its practical application to thereby enable others skilled in the art to best utilize the invention in various embodiments and with various modifications as are suited to the particular use contemplated.

## Claims

1. An apparatus for monitoring the pH of a fluid which comprises

(a) means for generating an illumination beam,

(b) support material for fluorescent organic dye molecules, the surface being in contact with the said fluid,

(c) a plurality of organic dye molecules covalently attached to the surface of a support material, wherein the surface density of the organic dye molecules bound to the support material is adjusted so that it falls within a range characterised by a strong fluorescent response in the range of the pH being monitored.

(d) means for detecting the fluorescent signal and relating the intensity thereof to the pH of the associated fluid.

2. An apparatus as claimed in claim 1 wherein there are at least $10^3$ organic dye molecules attached to said support means.

3. An apparatus as claimed in claim 1 or claim 2 wherein the organic dye molecules are fluorescein.

4. An apparatus as claimed in any one of claims 1 to 3 wherein said support means is made of controlled - pore glass and the organic dye molecules are bound by a silane coupling agent, e.g. aminopropyl or aminoaryl.

5. An apparatus as claimed in any one of claims 1 to 4 wherein the apparatus further comprises a fiber optic through which said illumination beam is transmitted from a first end of the fiber optic to a second end of the fiber optic, the carrier particle being attached to the second end of the fiber optic so that light emanting from the second end of the fiber optic causes the attached organic dye molecules to fluoresce, and so that a portion of the fluorescence generated by said attached organic dye molecules is collected by the second end of the fiber optic and transmitted to the first end of the fiber optic, the transmitted portion of the generated fluorescence forming said fluorescent signal; and means associated with the first end of the fiber optic for separating the fluorescent signal from the illumination beam.

6. An apparatus as claimed in claim 5 wherein the apparatus further comprises means for monitoring the intensity of Raman emission of the fiber optic caused by transmission of said illumination beam through said fiber optic.

7. An apparatus as claimed in any one of claims 3 to 6 wherein the density range of the fluorescein molecules is from about $10^{-1}$ to $10^6$ molecules per square meter when the length of the coupling agent is from about 10 to 20 angstroms, preferably $10^9$ to $10^8$ of molecules per square micrometer, and from about $10^{-1}$ to $10^7$ molecules per square meter when the length of the coupling agent is about 5 angstroms, preferably $10^3$ to $10^7$ molecules per square micrometer.

8. An apparatus for monitoring the pH of an associated fluid produced by:

providing a fiber optic for transmitting an illumination beam from a first end of the fiber optic to a second end of the fiber optic;

attaching a controlled-pore glass particle having an average pore diameter of about 500 angstroms to the second end of the fiber optic so that light from the illumination beam illuminates the controlled-pore glass particle, the controlled-pore glass particle carrying aminopropyl silane coupling agents at a density within the range of about 1 - 2 x $10^6$ coupling agents per square micrometer;

dipping the controlled-pore glass particle into an aqueous solution of fluorescein isothiocyanate having a molar concentration between about 1 x $10^{-6}$ and 5 x $10^{-5}$; and

washing the controlled-pore glass particle in water for between about 30 to 60 minutes.

9. The use of an apparatus as claimed in any one of claims 3 to 8 in invasive monitoring of blood pH.

10. The use, in an apparatus for monitoring the pH of a fluid, or organic dye molecules covalently attached to the surface of a support material, wherein the surface density of the organic dye molecules bound to the support material is adjusted so that is falls within a range characterised by a strong fluorescent response in the range of the pH being monitored.

11. The use as claimed in claim 10 wherein the surface density of the bound organic dye molecules is adjusted by prevention of saturation of the coupling agents with the organic dye molecules.

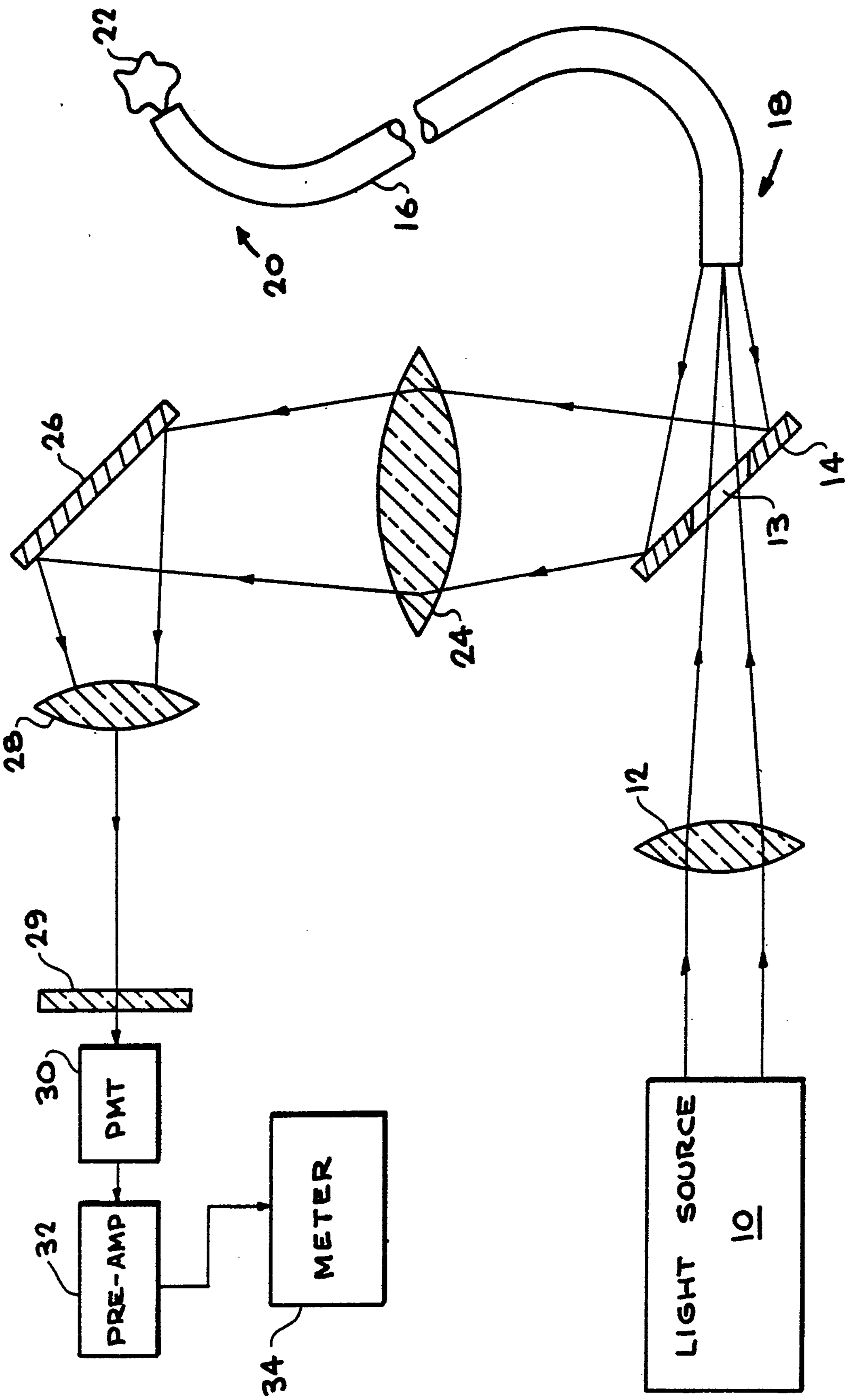

22
18
16
20
26
14
13
24
28
12
29
30
PMT
32
PRE-AMP
METER
34
LIGHT SOURCE
10


FIG.1

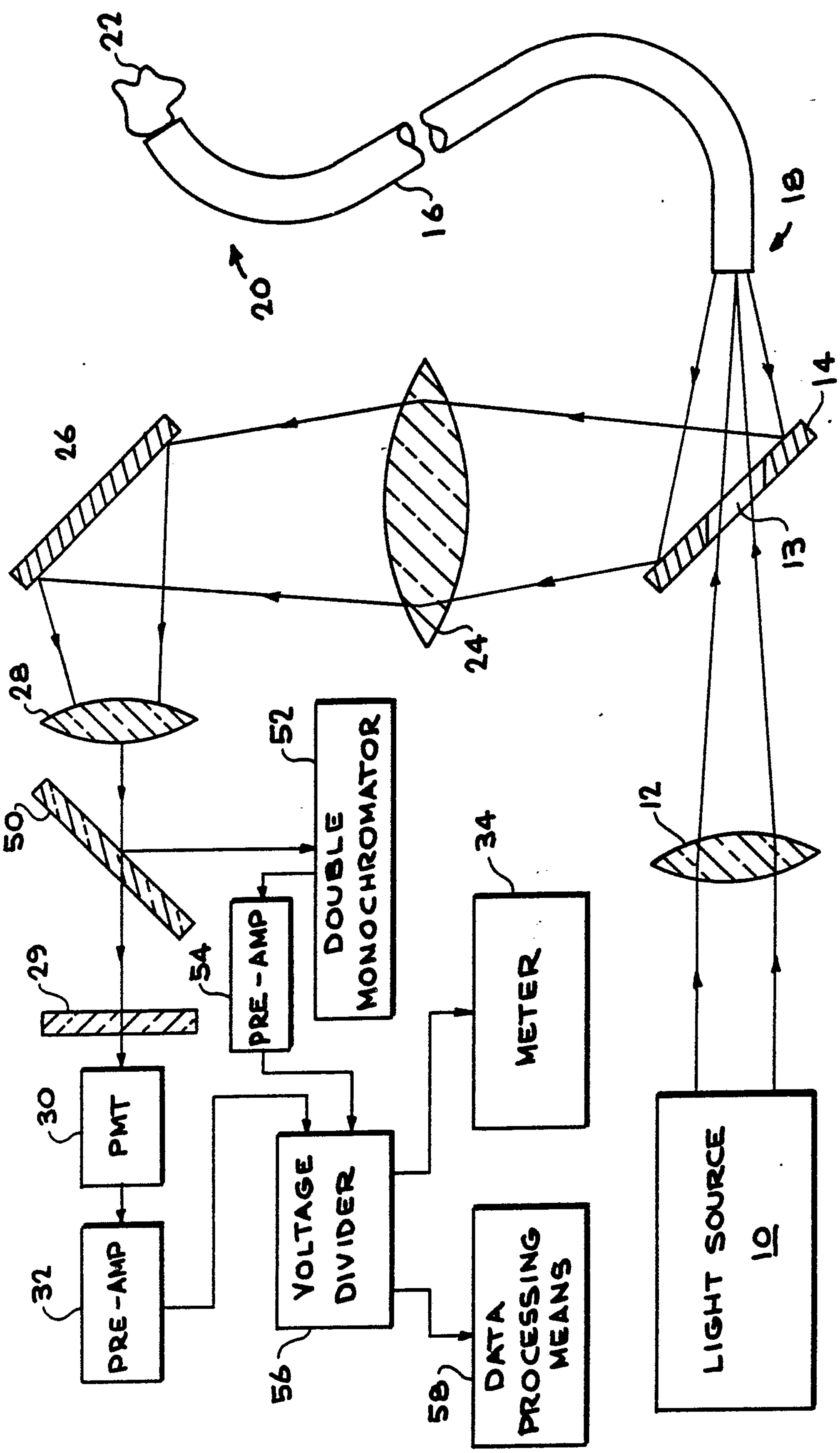

22
16
18
20
26
14
13
24
28
52
DOUBLE MONOCHROMATOR
50
12
34
54
PRE-AMP
29
METER
30
PMT
VOLTAGE DIVIDER
32
PRE-AMP
LIGHT SOURCE
10
DATA PROCESSING MEANS
56
58


FIG. 2

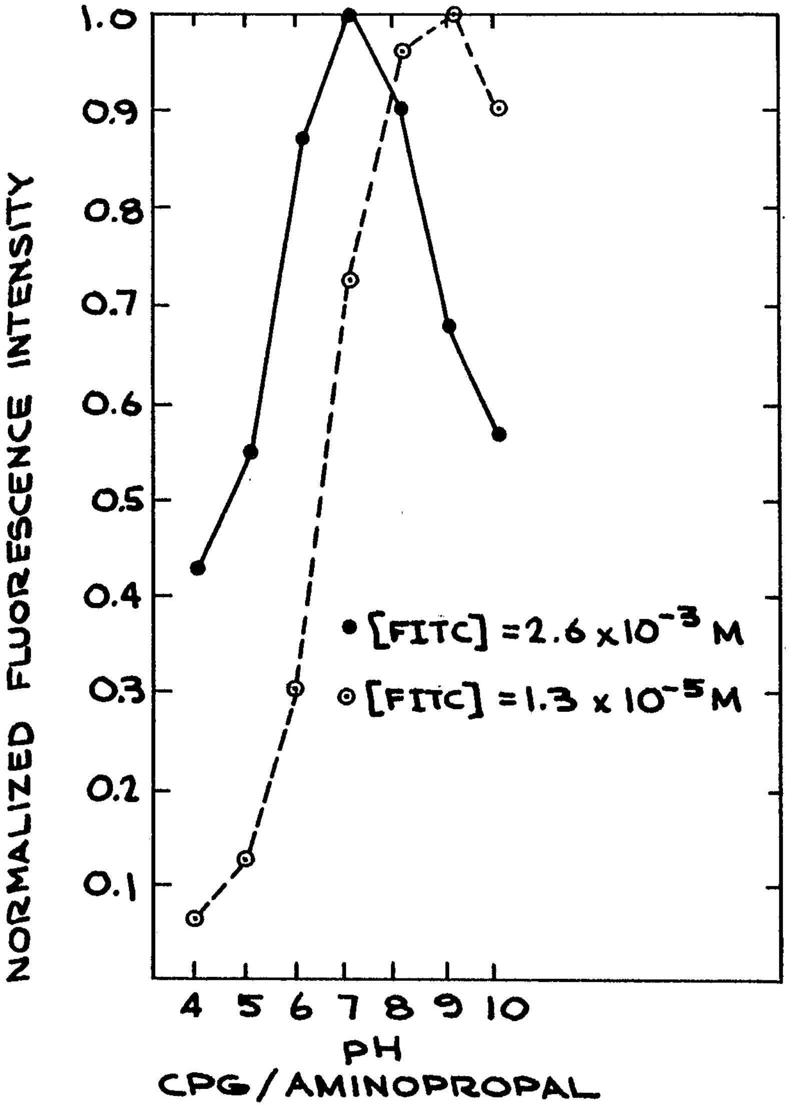
NORMALIZED FLUORESCENCE INTENSITY
1.0
0.9
0.8
0.7
0.6
0.5
0.4
0.3
0.2
0.1
4 5 6 7 8 9 10
PH
CPG/AMINOPROPAL
• [FITC] = 2.6 x 10$^{-3}$ M
⊙ [FITC] = 1.3 x 10$^{-5}$ M

FIG. 3

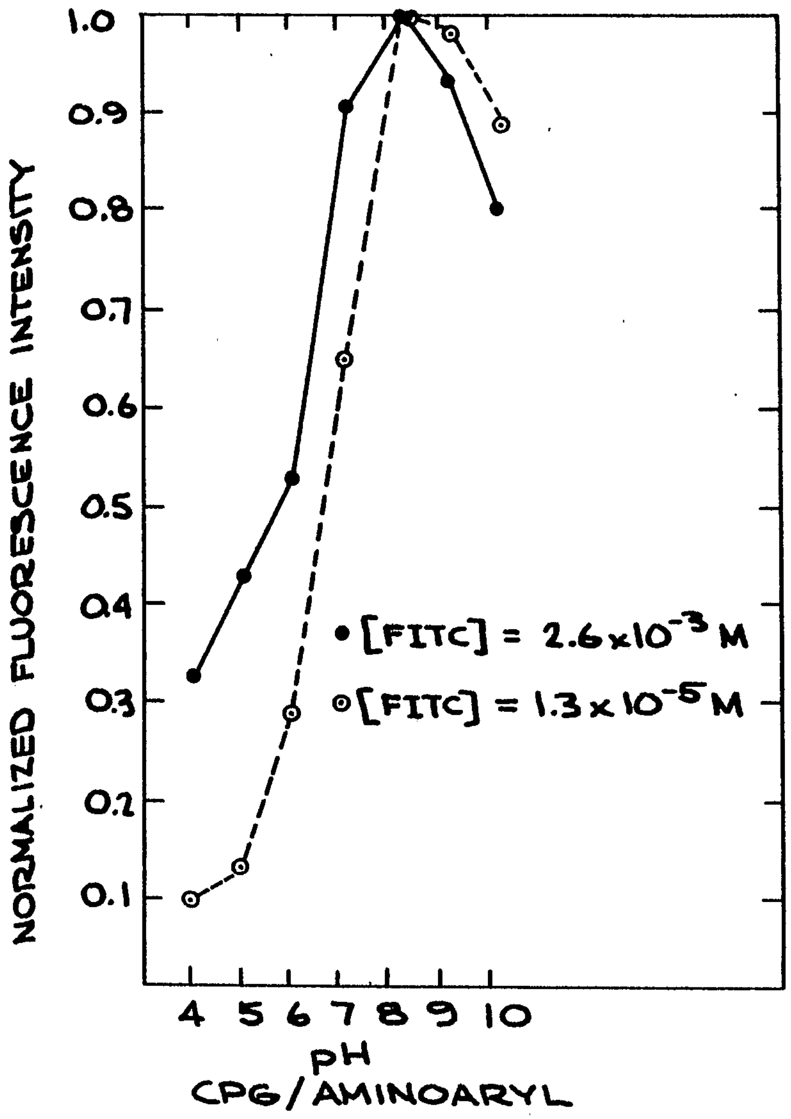
NORMALIZED FLUORESCENCE INTENSITY
1.0
0.9
0.8
0.7
0.6
0.5
0.4
0.3
0.2
0.1
4 5 6 7 8 9 10
PH
CPG/AMINOARYL
• [FITC] = 2.6 x 10$^{-3}$ M
⊙ [FITC] = 1.3 x 10$^{-5}$ M

FIG. 4

European Patent Office

# EUROPEAN SEARCH REPORT

Application number

EP 86 30 4141

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 073 558 (THE UNITED STATES OF AMERICA)<br>* page 5, line 1 - page 6, line 33 *<br>--- | 1,8,10 | G 01 N 21/64<br>G 01 N 21/77<br>G 01 N 21/80 |
| A | ANALYTICAL CHEMISTRY, vol. 52, no. 6, May 1980, pages 864-869, Easton, Pennsylvania, US; J.I. PETERSON et al.: "Fiber optic pH probe for physiological use"<br>* whole document *<br>--- | 1,8,10 | |
| A | ANALYTICAL CHEMISTRY, vol. 56, no. 1, January 1984, pages 16A-34A, Easton, Pennsylvania, US; W.R. SEITZ "Chemical sensors based on fiber optics"<br>* page 20A, column 3 - page 24A, column 1; page 24A, column 3; figure 3 *<br>--- | 1,8,10 | **TECHNICAL FIELDS SEARCHED (Int. Cl.4)** |
| | | | G 01 N 21/00 |
| A,D | US-A-4 200 110 (J.I. PETERSON et al.)<br>* whole document *<br>--- | 1,8,10 | |
| A | IEEE TRANSACTIONS ON BIOMEDICAL ENGINEERING, vol. BME-33, no. 2, February 1986, pages 117-132; J.L. GEHRICH et al.: "Optical fluorescence and its application to an intravascular blood gas monitoring system"<br>----- | | |

The present search report has been drawn up for all claims

| Place of search | Date of completion of the search | Examiner |
|---|---|---|
| BERLIN | 08-12-1986 | VINSOME R M |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82